# EUROPEAN PATENT APPLICATION

(11) **EP 4 654 341 A1**
(43) Date of publication of application: **26.11.2025**
(21) Application number: 24216091.9
(22) Date of filing: 28.11.2024
(51) Int. Cl.: H01M 50/103, H01M 50/15, H01M 50/536, H01M 50/55, H01M 50/552, H01M 50/566, B23K 20/10

(54) **BATTERY AND WELDING EQUIPMENT**

(30) Priority: 21.05.2024 CN 202421127617 U
(71) Applicant: CALB Group Co., Ltd., Changzhou City, Jiangsu Province (CN)
(72) Inventor: WANG, Ke, Changzhou City, Jiangsu Province (CN); XU, Jiuling, Changzhou City, Jiangsu Province (CN)
(74) Representative: Becker, Eberhard

(57) **Abstract**

A battery and welding equipment. The battery includes: a battery housing (10); a pole (20) arranged on the battery housing (10); and a cell (30) arranged in the battery housing (10) and including a cell main body (31) and a tab (32), the tab (32) extending from the cell main body (31) and being in direct welded connection with the pole (20); wherein one end of the pole (20) away from the tab (32) is provided with a plurality of pits (21), and a ratio of a depth of the pit (21) to a thickness of the tab (32) is 0.015-3.

## Description

### BACKGROUND

### Technical Field

The present utility model relates to the technical field of batteries, and more particularly relates to a battery and welding equipment.

### Description of Related Art

In the related art, a pole of a battery and a tab of a cell are in welded connection. When welded connection is performed, welding equipment is used for welding, while in a welding process, the problem of movement of the pole relative to a welding base may occur, and then the welding quality of the pole and the tab may be affected.

### SUMMARY

The present utility model provides a battery and welding equipment to improve the use performance of the battery.

According to a first aspect of the present utility model, provided is a battery, including: a battery housing;
a pole arranged on the battery housing; and
a cell arranged in the battery housing and including a cell main body and a tab, the tab extending from the cell main body and being in direct welded connection with the pole;
wherein one end of the pole away from the tab is provided with a plurality of pits, and a ratio of a depth of the pit to a thickness of the tab is 0.015-3.

A battery according to one example of the present utility model includes a battery housing, a pole and a cell, wherein the pole arranged on the battery housing is in electric connection with the cell arranged in the battery housing. A tab on a cell main body is in direct welded connection with the pole, thereby reducing the number of components used in the battery and improving the connection efficiency of the tab and the pole. By forming a plurality of pits in one end of the pole away from the tab, when the tab is directly welded with the pole, reliable contact between the plurality of pits and a welding base may be formed, so as to prevent the welding quality of the tab and the pole from being affected by relative displacement of the pole, while a ratio of a depth of the pit to a thickness of the tab is 0.015-3, by adjusting a relationship between the depth of the pit and the thickness of the tab, the stability of the pole in a welding process may be effectively controlled, so that the welding between the tab and the pole is more stable, thereby ensuring a high-quality welding effect, and then improving the safe use performance of the battery.

According to a second aspect of the present utility model, provided is welding equipment, being used for welding the above battery. The welding equipment includes:
a welding head; and
a welding base provided with a plurality of protruding points, the plurality of protruding points being used for being adapted to the plurality of pits.

The welding equipment according to one example of the present utility model includes a welding head and a welding base. In a process of welding the pole and the cell, by pressing the pole on the welding base, the welding head may face towards the tab on the cell main body, and then the direct welded connection between the tab and the pole is achieved. By arranging a plurality of protruding points on the welding base, a relatively stable positional relationship between the pole and the welding base may be ensured. A plurality of pits formed in one end of the pole away from the tab may be adapted to the plurality of protruding points, thereby enhancing the contact capability between the pole and the welding base, avoiding the relative displacement of the pole, and then ensuring the welding efficiency between the tab and the pole.

### BRIEF DESCRIPTION OF THE DRAWINGS

For a better understanding of the present disclosure, reference may be made to the examples shown in the accompanying drawings below. Components in the accompanying drawings may not necessarily be proportional, and related elements may be omitted, so as to emphasize and clearly illustrate the technical features of the present disclosure. In addition, related factors or components may have different arrangements as known in the art. Furthermore, in the accompanying drawings, like reference numerals indicate same or similar components in various accompanying drawings. In the drawings:
FIG. 1 is a schematic diagram of a structure of a battery shown according to an exemplary embodiment;
FIG. 2 is a schematic diagram of a local structure of the battery shown according to an exemplary embodiment;
FIG. 3 is a schematic diagram of a partial structure of the battery shown according to an exemplary embodiment; and
FIG. 4 is a schematic diagram of structures of a welding head and a welding base of welding equipment shown according to an exemplary embodiment.

### The description of reference numerals is as follows:

10. battery housing; 11. housing member; 12. cover plate; 20. pole; 21. pit; 22. positioning hole; 30. cell; 31. cell main body; 32. tab; 33. welding mark; 40. welding head; 41. first bump; 42. second bump; 50. welding base; and 51. protruding point.

### DESCRIPTION OF THE EMBODIMENTS

The technical solutions in exemplary examples of the present disclosure will be described clearly and completely in conjunction with accompanying drawings in the exemplary examples of the present disclosure. The exemplary examples described herein are merely for illustrative purposes and are not intended to limit the scope of protection of the present disclosure. Therefore, it should be understood that various modifications and changes may be made to the exemplary examples without departing from the scope of protection of the present disclosure.

In the description of the present disclosure, unless expressly stipulated and defined otherwise, the terms "first" and "second" are merely used for descriptive purposes and are not to be construed as indicating or implying relative importance; the term "a plurality of" refers to two or more; and the term "and/or" includes any combination and all combinations of one or more associated listed items. Especially, reference to "the/said" object or "one" object is similarly intended to indicate one of a plurality of such objects which are possible.

Unless otherwise stipulated or illustrated, the terms such as "connection" and "fixing" should be understood in a broad sense, for example, the "connection" may be fixed connection, detachable connection, integral connection, electric connection or signal connection; and the "connection" may be direct connection, or may also be indirect connection through an intermediate medium. For those skilled in the art, the specific meaning of the above terms in the present disclosure may be understood according to specific conditions.

Further, in the description of the present disclosure, it is to be understood that the orientations such as "up", "down", "inside" and "outside" described in the exemplary examples of the present disclosure are described from the perspective shown in the accompanying drawings, and should not be construed as defining the exemplary examples of the present disclosure. It is also to be understood that in context, when referring to one element or feature being connected "above", "below", "inside" or "outside" other elements (one or more), the element or feature may be not only directly connected "above", "below", "inside" or "outside" the other (one or more) elements, and may also be indirectly connected "above", "below", "inside" or "outside" the other (one or more) elements through an intermediate element.

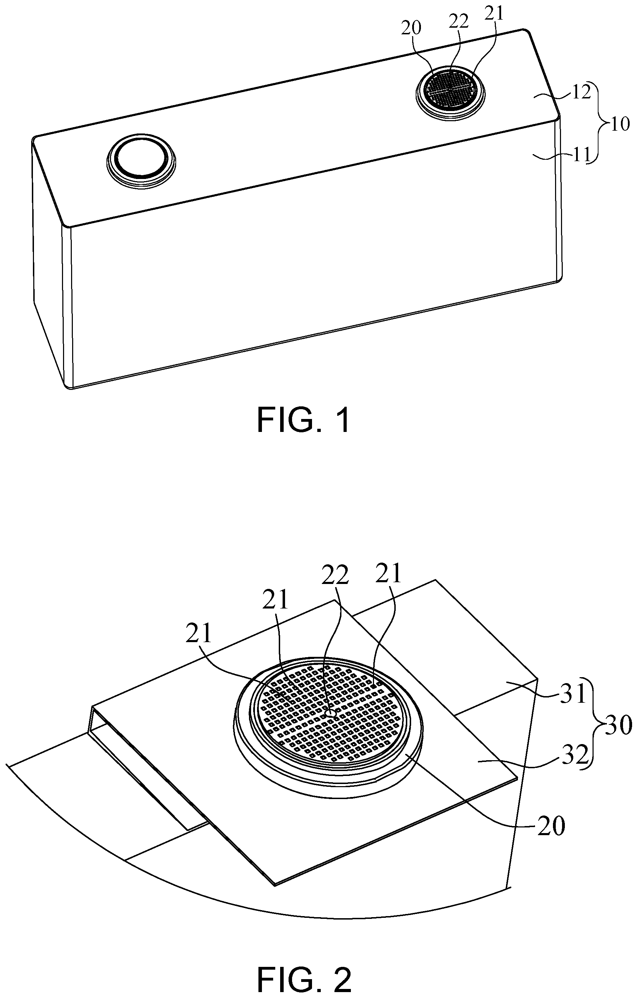

One example of the present utility model provides a battery, with reference to FIG. 1 to FIG. 3, the battery includes: a battery housing 10; a pole 20 arranged on the battery housing 10; and a cell 30 arranged in the battery housing 10 and including a cell main body 31 and a tab 32, the tab 32 extending from the cell main body 31 and being in direct welded connection with the pole 20; wherein one end of the pole 20 away from the tab 32 is provided with a plurality of pits 21, and a ratio of a depth of the pit 21 to a thickness of the tab 32 is 0.015-3.

A battery according to one example of the present utility model includes a battery housing 10, a pole 20 and a cell 30, wherein the pole 20 arranged on the battery housing 10 is in electric connection with the cell 30 arranged in the battery housing 10. A tab 32 on a cell main body 31 is in direct welded connection with the pole 20, thereby reducing the number of components used in the battery and improving the connection efficiency of the tab 32 and the pole 20. By forming a plurality of pits 21 in one end of the pole 20 away from the tab 32, when the tab 32 is directly welded with the pole 20, reliable contact between the plurality of pits 21 and a welding base may be formed, so as to prevent the welding quality of the tab 32 and the pole 20 from being affected by relative displacement of the pole 20, while a ratio of a depth of the pit 21 to a thickness of the tab 32 is 0.015-3, by adjusting a relationship between the depth of the pit 21 and the thickness of the tab 32, the stability of the pole 20 in a welding process may be effectively controlled, so that the welding between the tab 32 and the pole 20 is more stable, thereby ensuring a high-quality welding effect, and then improving the safe use performance of the battery.

It should be noted that the tab 32 is in direct welded connection with the pole 20, that is, an adapter sheet does not need to be arranged between the tab 32 and pole 20 for adapter connection, and then the adapter sheet may be omitted, thereby reducing the number of components used in the battery and then increasing the overall energy density of the battery. When batteries are grouped, the adjacent batteries may be in electric connection through a busbar, and the busbar may be in welded connection with the pole 20.

In a process of welding the tab 32 and the pole 20, the pole 20 may be pressed on the welding base, while the welding head may face towards the tab 32. In a process of directly welding the tab 32 with the pole 20, the stability of the pole 20 needs to be ensured, so as to prevent the welding quality from being affected by relative displacement of the pole 20. Restricted by the fact that the thickness of the tab 32 is related to the depth of the pit 21, the greater the thickness of the tab 32 is, the greater the depth of the pit 21 is, so as to ensure that a relative position of the pole 20 does not change. Meanwhile, the pit 21 facilitates the subsequent welding with the busbar, and improves the welding efficiency of the two; and when the thickness of the tab 32 is constant and the depth of the pit 21 is excessive, the welding quality of the pole 20 and the busbar may be affected, and when the depth of the pit 21 is insufficient, the limiting of the pole 20 in the welding process cannot be ensured. The above risks may be effectively controlled by setting the ratio of the depth of the pit 21 to the thickness of the tab 32 to be 0.015-3.

The ratio of the depth of the pit 21 to the thickness of the tab 32 may be 0.015, 0.016, 0.017, 0.018, 0.019, 0.02, 0.025, 0.03, 0.04, 0.05, 0.06, 0.07, 0.08, 0.09, 0.1, 0.2, 0.3, 0.4, 0.5, 0.6, 0.7, 0.8, 0.9, 1, 1.1 , 1.2, 1.3, 1.4, 1.5, 1.6, 1.7, 1.8, 1.9, 2, 2.1, 2.2, 2.3, 2.4, 2.5, 2.6, 2.7, 2.8, 2.9 or 3, and the like.

The depth of the pit 21 may be considered as a maximum depth of the pit 21, the tab 32 consists of a plurality of single tabs, and the thickness of the tab 32 is a total thickness of the plurality of single tabs.

In one example, the ratio of the depth of the pit 21 to the thickness of the tab 32 is 0.05-1, thereby not only ensuring the stability of the pole 20 in the welding process, but also ensuring the welding and fixing strength between the tab 32 and the pole 20, without causing damage to the tab 32 or the pole 20 in the welding process.

In one example, the ratio of the depth of the pit 21 to the height of the pole 20 is 0.005-0.1, thereby not only ensuring that reliable fixation between the pit 21 and the welding base may be formed, and ensuring the welding quality between the tab 32 and the pole 20, but also preventing the structural strength and discharge capacity of the pole 20 from being affected by the excessive depth of the pit 21, and then effectively improving the safe use performance of the battery.

If the ratio of the depth of the pit 21 to the height of the pole 20 is too small, a fixing effect of the pole 20 in the welding process is not good; and if the ratio of the depth of the pit 21 to the height of the pole 20 is too large, pseudo welding is likely to be generated when the pole 20 is welded with the busbar, so that the welding strength is not good.

The ratio of the depth of the pit 21 to the height of the pole 20 may be 0.005, 0.006, 0.007, 0.008, 0.009, 0.01, 0.02, 0.025, 0.03, 0.04, 0.05, 0.06, 0.07, 0.08, 0.09, 0.1, and the like.

In one example, at least two of the pits 21 have inconsistent depths, so that a pressing force between the pole 20 and each position of the welding base may be controlled to avoid damage to the pole 20 under the stress, thereby ensuring the welding quality of the tab 32 and the pole 20, then ensuring the connection strength of the tab 32 and the pole 20, and ensuring the discharge capacity between the tab 32 and the pole 20.

In one example, the depths of the plurality of pits 21 gradually decrease in a direction from a center of the pole 20 towards a circumferential outer edge of the pole 20, thereby ensuring that a central area of the pole 20 may be subjected to a relatively large force, also preventing the tab 32 from being crushed in the welding process, and reducing the risk of tearing the tab 32 when the tab 32 is close to a circumferential area due to excessive stress.

One end of the pole 20 away from the tab 32 may have a roughly circular face, and at this moment, the depths of the plurality of pits 21 may gradually decrease along a radial direction of the circular face.

In one example, as shown in FIG. 1 and FIG. 2, one end of the pole 20 away from the tab 32 is provided with a positioning hole 22, and the plurality of pits 21 are formed around the positioning hole 22; wherein a port area of the positioning hole 22 is greater than a port area of the single pit 21, thereby ensuring that the positioning hole 22 can have reliable positioning capability, for example, in a process of welding the busbar with the pole 20, the positioning of the busbar may be achieved through the positioning hole 22, thereby ensuring the quick positioning of the busbar and the pole 20, improving the connection efficiency of the busbar and the pole 20, and then improving the grouping efficiency of the batteries.

A port of the positioning hole 22 is an opening of the positioning hole 22 at an end face of the pole 20 away from the tab 32, and a port of the pit 21 is an opening of the pit 21 at the end face of the pole 20 away from the tab 32.

In one example, a ratio of the port area of the positioning hole 22 to the port area of the single pit 21 is 1.2-2,000, thereby not only ensuring that the effective positioning of the pole 20 may be formed by the pit 21 in the welding process, ensuring the welding quality between the pole 20 and the tab 32, and improving the fixing capability between the pole 20 and the tab 32, but also facilitating the subsequent grouping of the batteries as the positioning of the busbar may be facilitated by the positioning hole 22.

If the ratio of the port area of the positioning hole 22 to the port area of the single pit 21 is too large, the fixing quality of the pole 20 may be affected, so that the pole 20 is likely to rotate in the welding process, thereby being not conducive to ensuring the welding effect between the pole 20 and the tab 32; and if the ratio of the port area of the positioning hole 22 to the port area of the single pit 21 is too small, it is not conducive to the positioning of the busbar and not conducive to the improvement of the connection efficiency between the pole 20 and the busbar.

The ratio of the port area of the positioning hole 22 to the port area of the single pit 21 may be 1.2, 1.5, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 70, 80, 90, 100, 110, 120, 130, 140, 150, 200 , 250, 300, 400, 500, 600, 700, 800, 900, 1,000, 1,100, 1,200, 1,300, 1,400, 1,500, 1,600, 1,700, 1,800, 1,900 or 2,000, and the like.

If the ratio of the port area of the positioning hole 22 to the port area of the single pit 21 is too small, the busbar and the pole 20 cannot be accurately positioned during welding; and if the ratio of the port area of the positioning hole 22 to the port area of the single pit 21 is too large, the fixing effect cannot be achieved in the process of welding the pole 20 and the tab 32.

In one example, the port area of the single pit 21 is 0.01 mm² to 0.16 mm², thereby not only achieving the reliable fixing of the pole 20, but also preventing the structural strength of the 20 from being affected as the port area of the single pit 21 is too large, which is not conducive to the connection between the pole 20 and the busbar.

The port area of the single pit 21 may be 0.01 mm², 0.02 mm², 0.03 mm², 0.04 mm², 0.05 mm², 0.06 mm², 0.07 mm², 0.08 mm², 0.09 mm², 0.1 mm², 0.11 mm², 0.12 mm², 0.13 mm², 0.14 mm², 0.15 mm² or 0.16 mm², and the like.

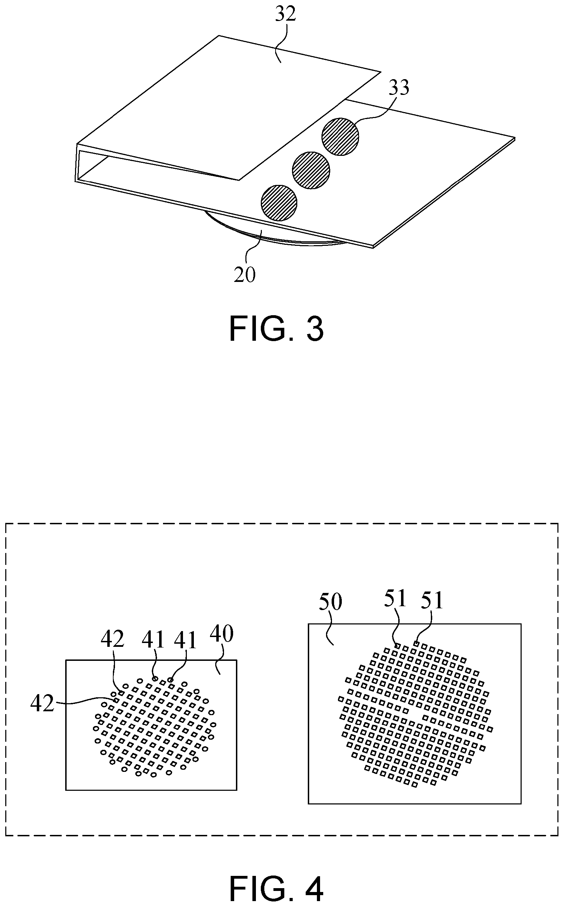

In one example, as shown in FIG. 3, the tab 32 is welded with the pole 20 to form a welding mark 33, and an orthographic projection of the welding mark 33 on the tab 32 is a centrosymmetric figure, thereby not only facilitating the welding connection between the tab 32 and the pole 20, but also enabling the welding mark 33 formed between the tab 32 and the pole 20 to have relatively balanced connection capability at each position, and effectively controlling the discharge capacity between the tab 32 and the pole 20.

The orthographic projection is formed by the welding mark 33 on the tab 32, and the figure is the centrosymmetric figure, that is, the figure is rotated by 180° around a certain point, and the rotated figure can coincide with the original figure.

In one example, the welding mark 33 is a circular welding mark, that is, a circular structure is basically formed by an outer contour of the welding mark 33, and it may be further considered that after the outer contour of the welding mark 33 is outlined as a figure, the figure is basically circular. The circular welding mark may not only ensure the connection stability between the pole 20 and the tab 32, but also effectively control the welding quality of the tab 32 to avoid damage to the tab 32.

For example, the outer contour of the welding mark 33 may be a figure formed by connecting outermost sides of a plurality of circles which are arranged at intervals.

In one example, the welding mark 33 includes a plurality of circular welding marks, so that stress relief can be formed by the circular welding marks, thereby reducing the risk of tearing the tab 32, then improving the discharge capacity of the tab 32, and also reducing the risk of short-circuiting of the tab 32 with other structures.

Wherein, a plurality of circular welding marks are formed, and the welding mark 33 may include a plurality of circular welding marks and a plurality of rectangular welding marks.

In one example, the tab 32 is welded with the pole 20 to form the welding mark 33, and a ratio of a total area of ports of the plurality of pits 21 to a total area of the welding mark 33 is 0.3-23, so as to ensure the fixing capability of the pole 20 according to the area of the welding mark 33 in the welding process, and then ensure the welding and fixing capability between the tab 32 and the pole 20.

The total area of the ports of the plurality of pits 21 is the sum of port areas of various pits 21, while the total area of the welding mark 33 may be considered as follows: for example, the welding mark 33 includes a plurality of circular welding marks and a plurality of rectangular welding marks, and the total area enclosed by the circumferential outer edge of the welding mark 33 is the sum of the area of the plurality of circular welding marks and the area of the plurality of rectangular welding marks.

The ratio of the total area of the ports of the plurality of pits 21 to the total area of the welding mark 33 may be 0.3, 0.4, 0.5, 0.6, 0.7, 0.8, 0.9, 1, 1.1, 1.2, 1.5, 2, 3, 4, 5, 6, 7, 8, 9, 10, 11, 12, 13, 14, 15, 16, 17, 18, 19, 20, 21, 22 or 23, and the like.

If the ratio of the total area of the ports of the plurality of pits 21 to the total area of the welding mark 33 is too small, the pole 20 cannot be well fixed in the welding process; and if the ratio of the total area of the ports of the plurality of pits 21 to the total area of the welding mark 33 is too large, the discharge capacity of the overall pole 20 may be affected, thereby being not conducive to ensuring the use performance of the battery.

In one example, the tab 32 and the pole 20 are in ultrasonic welded connection, that is, the connection between the pole 20 and the tab 32 may be formed by adopting ultrasonic welding, so that not only the welding mode is simple, but also the connection strength between the tab 32 and the pole 20 may be ensured.

The tab 32 and the pole 20 may be connected by adopting torque welding.

In one example, as shown in FIG. 1, the battery housing 10 may include a cover plate 12 and a housing member 11, wherein the cover plate 12 and the housing member 11 may be in welded connection, the cover plate 12 may be provided with two poles 20, and the two poles 20 may be respectively connected to two tabs 32. The two poles 20 may be each provided with a plurality of pits 21, or one pole 20 may be provided with a plurality of pits 21, while the other pole 20 may not be provided with the pit 21.

The cell main body 31 may be provided with two tabs 32, the two tabs 32 are respectively connected to the two poles 20, the two tabs 32 may be a positive tab and a negative tab respectively, and the two poles 20 may be a positive pole and a negative pole respectively.

One or more cells 30 may be arranged in the battery housing 10, which is not limited herein.

It should be noted that the battery includes the cell and electrolyte, which is a smallest unit capable of performing electrochemical reactions such as charging/discharging. The cell refers to a unit formed by winding or laminating a stacking portion, and the stacking portion includes a first pole piece, a separator and a second pole piece. When the first pole piece is a positive plate, the second pole piece is a negative plate, wherein polarities of the first pole piece and the second pole piece may be exchanged. The first pole piece and the second pole piece are coated with active substances.

In one example, the battery may be a quadrangular battery, the quadrangular battery mainly refers to that the appearance is in the shape of a prism, but it is not strictly defined whether each edge of the prism must be a straight line in a strict sense, and a corner between the edges is not necessarily a right angle and may be circular arc transition.

The battery may be a laminated battery, so as to not only facilitate the grouping, but also obtain a longer battery by processing. Specifically, the cell is a laminated cell, and the cell has first pole pieces stacked with each other, second pole pieces charged oppositely to the first pole pieces, and separator pieces arranged between the first pole pieces and the second pole pieces, so that a plurality of pairs of first pole pieces and second pole pieces are stacked to form the laminated cell.

Or, the battery may be a winding battery, that is, the first pole piece, the second pole piece charged oppositely to the first pole piece, and the separator piece arranged between the first pole piece and the second pole piece are wound to obtain the winding cell.

In one example, the battery may be a cylindrical battery, or the battery may be a battery in the shape of a hexagonal prism. The battery may be a winding battery, that is, the first pole piece, the second pole piece charged oppositely to the first pole piece, and the separator piece arranged between the first pole piece and the second pole piece are wound to obtain the winding cell.

One example of the present utility model further provides a battery pack, including the above battery.

The battery of the battery pack according to one example of the present utility model includes a battery housing 10, a pole 20 and a cell 30, wherein the pole 20 arranged on the battery housing 10 is in electric connection with the cell 30 arranged in the battery housing 10, and a tab 32 on a cell main body 31 is in direct welded connection with the pole 20, thereby reducing the number of components used in the battery and improving the connection efficiency of the tab 32 and the pole 20. By forming a plurality of pits 21 in one end of the pole 20 away from the tab 32, when the tab 32 is directly welded with the pole 20, reliable contact between the plurality of pits 21 and a welding base may be formed, so as to prevent the welding quality of the tab 32 and the pole 20 from being affected by relative displacement of the pole 20, while a ratio of a depth of the pit 21 to a thickness of the tab 32 is 0.015-3, by adjusting a relationship between the depth of the pit 21 and the thickness of the tab 32, the stability of the pole 20 in a welding process may be effectively controlled, so that the welding between the tab 32 and the pole 20 is more stable, thereby ensuring a high-quality welding effect, and then improving the safe use performance of the battery pack.

In one example, the battery pack is a battery module or a battery package.

The battery module includes a plurality of batteries, and the battery module may also include an end plate and a side plate which are used for fixing the plurality of batteries.

It should be noted that the plurality of batteries may be arranged in a battery box after forming the battery module, and the plurality of batteries may be fixed by the end plate and the side plate. The plurality of batteries may be directly arranged in the battery box, that is, the plurality of batteries do not need to be grouped, and at this moment, the end plate and the side plate may be removed.

One example of the present utility model further provides welding equipment, with reference to FIG. 4, the welding equipment is used for welding the above battery, and the welding equipment includes: a welding head 40; and a welding base 50 provided with a plurality of protruding points 51, the plurality of protruding points 51 being adapted to the plurality of pits 21.

The welding equipment according to one example of the present utility model includes a welding head 40 and a welding base 50. In a process of welding the pole 20 and the cell 30, by pressing the pole 20 on the welding base 50, the welding head 40 may face towards the tab 32 on the cell main body 31, and then the direct welded connection between the tab 32 and the pole 20 is achieved. By arranging a plurality of protruding points 51 on the welding base 50, a relatively stable positional relationship between the pole 20 and the welding base 50 may be ensured. A plurality of pits 21 formed in one end of the pole 20 away from the tab 32 may be adapted to the plurality of protruding points 51, thereby enhancing the contact capability between the pole 20 and the welding base 50, avoiding the relative displacement of the pole 20, and then ensuring the welding efficiency between the tab 32 and the pole 20.

It should be noted that as shown in FIG. 4, the welding base 50 is provided with a plurality of protruding points 51, when the pole 20 is pressed on the welding base 50, a plurality of pits 21 may be formed in one end of the pole 20 away from the tab 32, that is, the pits 21 may be extruded by the protruding points 51 on the welding base 50. Or, a plurality of pits 21 may be processed in one end of the pole 20 away from tab 32 before the pole 20 is pressed on the welding base 50, and subsequently the pole 20 is pressed on the welding base 50, and at this moment, the plurality of pits 21 may be adapted to the plurality of protruding points 51.

In one example, the welding head 40 is provided with a plurality of bumps, and an orthographic projection of the plurality of bumps on the welding head 40 is a centrosymmetric figure, thereby forming a centrosymmetric welding mark 33 on the tab 32 when the pole 20 and the tab 32 are welded.

The orthographic projection is formed by the plurality of bumps on the welding head 40, and the figure is the centrosymmetric figure, that is, the figure is rotated by 180° around a certain point, and the rotated figure can coincide with the original figure. The orthographic projection of the plurality of bumps on the welding head 40 is the centrosymmetric figure, for example, may be a centrosymmetric figure formed by a plurality of circular bumps, or may be a centrosymmetric figure formed by a plurality of square bumps, or may be a centrosymmetric figure jointly formed by a plurality of circular bumps and a plurality of square bumps.

In one example, as shown in FIG. 4, the welding head 40 is provided with a plurality of first bumps 41 and a plurality of second bumps 42, an orthographic projection of the first bumps 41 on the welding head is circular, and an orthographic projection of the second bumps 42 on the welding head is polygonal; wherein the welding head 40 is an ultrasonic welding head, so that the welding head 40 may be arranged on the tab 32 in a pressing way when the tab 32 and the pole 20 are welded, thereby forming welding marks adapted to the first bumps 41 and the second bumps 42 on the tab 32, and then ensuring the welding quality between the tab 32 and the pole 20.

In one example, the plurality of first bumps 41 are arranged around the plurality of second bumps 42, that is, circular welding marks formed on the tab 32 may be arranged around polygonal welding marks, so that stress relief can be formed by the circular welding marks, thereby effectively reducing the risk of tearing the tab 32.

After considering the specification and practicing the present utility model creation disclosed herein, those skilled in the art will readily think of other implementations of the present disclosure. The present disclosure is intended to cover any variation, use or adaptation of the present utility model, and these variations, uses or adaptations follow the general principle of the present disclosure and include common knowledge or customary technical means in the technical field not disclosed in the present disclosure.

## Claims

1. A battery, **characterized by** comprising:
a battery housing (10);
a pole (20) arranged on the battery housing (10); and
a cell (30) arranged in the battery housing (10) and including a cell main body (31) and a tab (32), the tab (32) extending from the cell main body (31) and being in direct welded connection with the pole (20);
wherein one end of the pole (20) away from the tab (32) is provided with a plurality of pits (21), and a ratio of a depth of the pit (21) to a thickness of the tab (32) is 0.015-3.

2. The battery according to claim 1, **characterized in that** the ratio of the depth of the pit (21) to the thickness of the tab (32) is 0.05-1.

3. The battery according to claim 1, **characterized in that** a ratio of the depth of the pit (21) to a height of the pole (20) is 0.005-0.1.

4. The battery according to claim 1, **characterized in that** at least two of the pits (21) have inconsistent depths.

5. The battery according to claim 4, **characterized in that** the depths of the plurality of pits (21) gradually decrease in a direction from a center of the pole (20) towards a circumferential outer edge of the pole (20).

6. The battery according to claim 1, **characterized in that** one end of the pole (20) away from the tab (32) is provided with a positioning hole (22), and the plurality of pits (21) are formed around the positioning hole (22);
wherein a port area of the positioning hole (22) is greater than a port area of the single pit (21).

7. The battery according to claim 6, **characterized in that** a ratio of the port area of the positioning hole (22) to the port area of the single pit (21) is 1.2-2,000.

8. The battery according to claim 1, **characterized in that** the port area of the single pit (21) is 0.01 mm² to 0.16 mm².

9. The battery according to any one of claims 1 to 8, **characterized in that** the tab (32) is welded with the pole (20) to form a welding mark (33), and an orthographic projection of the welding mark (33) on the tab (32) is a centrosymmetric figure.

10. The battery according to claim 9, **characterized in that** the welding mark (33) is a circular welding mark.

11. The battery according to claim 1, **characterized in that** the tab (32) is welded with the pole (20) to form the welding mark (33), and a ratio of a total area of ports of the plurality of pits (21) to a total area of the welding mark (33) is 0.3-23.

12. Welding equipment, **characterized by** being used for welding the battery according to any one of claims 1 to 11, the welding equipment comprising:
a welding head; and
a welding base provided with a plurality of protruding points, the plurality of protruding points being used for being adapted to the plurality of pits (21).

13. The welding equipment according to claim 12, **characterized in that** the welding head is provided with a plurality of bumps, and an orthographic projection of the plurality of bumps on the welding head is a centrosymmetric figure.

14. The welding equipment according to claim 12 or 13, **characterized in that** the welding head is provided with a plurality of first bumps and a plurality of second bumps, an orthographic projection of the first bumps on the welding head is circular, and an orthographic projection of the second bumps on the welding head is polygonal;
wherein the welding head is an ultrasonic welding head.

15. The welding equipment according to claim 14, **characterized in that** the plurality of first bumps are arranged around the plurality of second bumps.

## Amended claims

### Amended claims in accordance with Rule 137(2) EPC.

1. A battery, comprising:
a battery housing (10);
a pole (20) arranged on the battery housing (10); and
a cell (30) arranged in the battery housing (10) and including a cell main body (31) and a tab (32), the tab (32) extending from the cell main body (31) and being in direct welded connection with the pole (20);
wherein the battery is **characterized in that**
one end of the pole (20) away from the tab (32) is provided with a plurality of pits (21), and a ratio of a depth of each of the pits (21) to a thickness of the tab (32) is 0.015-3.

2. The battery according to claim 1, **characterized in that** the ratio of the depth of the pit (21) to the thickness of the tab (32) is 0.05-1.

3. The battery according to claim 1, **characterized in that** a ratio of the depth of the pit (21) to a height of the pole (20) is 0.005-0.1.

4. The battery according to claim 1, **characterized in that** at least two of the pits (21) have inconsistent depths.

5. The battery according to claim 4, **characterized in that** the depths of the plurality of pits (21) gradually decrease in a direction from a center of the pole (20) towards a circumferential outer edge of the pole (20).

6. The battery according to claim 1, **characterized in that** one end of the pole (20) away from the tab (32) is provided with a positioning hole (22), and the plurality of pits (21) are formed around the positioning hole (22);
wherein a port area of the positioning hole (22) is greater than a port area of the single pit (21).

7. The battery according to claim 6, **characterized in that** a ratio of the port area of the positioning hole (22) to the port area of the single pit (21) is 1.2-2,000.

8. The battery according to claim 1, **characterized in that** the port area of the single pit (21) is 0.01 mm² to 0.16 mm².

9. The battery according to any one of claims 1 to 8, **characterized in that** the tab (32) is welded with the pole (20) to form a welding mark (33), and an orthographic projection of the welding mark (33) on the tab (32) is a centrosymmetric figure.

10. The battery according to claim 9, **characterized in that** the welding mark (33) is a circular welding mark.

11. The battery according to claim 1, **characterized in that** the tab (32) is welded with the pole (20) to form the welding mark (33), and a ratio of a total area of ports of the plurality of pits (21) to a total area of the welding mark (33) is 0.3-23.

12. Ultrasonic welding system, **characterized by** comprising:
a pole (20);
a tab (32), extending from a cell main body (31) configured for being in direct welded connection with the pole (20); and
an ultrasonic welding equipment, comprising:
a welding head; and
a welding base provided with a plurality of protruding points, wherein one end of the pole (20) away from the tab (32) is provided with a plurality of pits (21) as defined in claim 1, and the plurality of protruding points being used for being adapted to the plurality of pits (21).

13. The welding equipment according to claim 12, **characterized in that** the welding head is provided with a plurality of bumps, and an orthographic projection of the plurality of bumps on the welding head is a centrosymmetric figure.

14. The welding equipment according to claim 12 or 13, **characterized in that** the welding head is provided with a plurality of first bumps and a plurality of second bumps, an orthographic projection of the first bumps on the welding head is circular, and an orthographic projection of the second bumps on the welding head is polygonal;
wherein the welding head is an ultrasonic welding head.

15. The welding equipment according to claim 14, **characterized in that** the plurality of first bumps are arranged around the plurality of second bumps.
